# EUROPEAN PATENT APPLICATION

(11) **EP 4 151 986 A1**
(43) Date of publication of application: **22.03.2023**
(21) Application number: 21805005.2
(22) Date of filing: 18.03.2021
(51) Int. Cl.: G01N 21/01, G01N 21/15

(54) **INSPECTION DEVICE**

(30) Priority: 15.05.2020 JP 2020085897
(71) Applicant: FUJIFILM Corporation, Tokyo 106-8620 (JP)
(72) Inventor: MIYATO, Takahiro, Ashigarakami-gun, Kanagawa 258-8538 (JP); SHIMIZU, Hitoshi, Ashigarakami-gun, Kanagawa 258-8538 (JP); IRISAWA, Kaku, Ashigarakami-gun, Kanagawa 258-8538 (JP)
(74) Representative: Jeffrey, Philip Michael
(86) International application number: PCT/JP2021/011185
(87) International publication number: WO 2021/229915

(57) **Abstract**

Provided is a test device that inspects a test target using light, and that can improve test accuracy.

A test device (10) includes a specimen (21) a specimen with a circular cross section that accommodates a test target, a specimen holding part (22) that has an opening (31) with a circular cross section and holds the specimen (21), a plurality of light emitting elements (41V), (41B), and (41R) that irradiate the specimen (21) with light from a plurality of directions, a light-receiving element (53) that faces the light emitting elements (41V), (41B), and (41R) through the specimen (21), and a pressing member (62) that projects from an interior wall of the opening (31) into the opening (31) to press the specimen (21) and press the specimen (21) against the interior wall on an opposite side.

## Description

### BACKGROUND OF THE INVENTION

### 1. Field of the Invention

The present invention relates to a test device that includes a light emitting element that illuminates a test target and a light-receiving element that receives light from the test target, and that inspects the test target using light.

### 2. Description of the Related Art

JP2006-322854A below is known as a test device that tests a test target using light. JP2006-322854A below describes a configuration in which a measurement error is reduced by pressing a sensor unit mounted with a light-receiving element against a measurement stage on which a test target is set.

### SUMMARY OF THE INVENTION

However, in a case where the sensor unit is pressed against the measurement stage as in above-described JP2006-322854A, there was a problem that a position and orientation of the sensor unit changed, and test accuracy deteriorated.

The present invention has been made in view of the above background, and an object thereof is to provide a test device capable of improving test accuracy.

In order to achieve the above object, a test device according to an aspect of the present invention comprises a specimen with a circular cross section that accommodates a test target, a specimen holding part that has an opening portion with a circular cross section and holds the specimen, a plurality of light emitting elements that irradiate the specimen with light from a plurality of directions, a light-receiving element that faces the light emitting element through the specimen, and a pressing member that projects from an interior wall of the opening portion into the opening portion to press the specimen and press the specimen against the interior wall on an opposite side.

A first light emitting element and a second light emitting element may be provided as the light emitting elements, and the pressing member may press the specimen toward an intermediate point between the first light emitting element and the second light emitting element.

A third light emitting element disposed at the intermediate point between the first light emitting element and the second light emitting element may be provided as the light emitting element, and the pressing member may press the specimen toward the third light emitting element.

Each of the light emitting elements may have a mutually different emission color.

The specimen holding part may include a plurality of opening portions and hold a plurality of specimens.

The specimen may be formed long in a direction perpendicular to the cross section, and the specimen holding part may hold the plurality of specimens arranged in a horizontal direction in a posture in which a longitudinal direction is vertical.

The specimen may be formed in a cylindrical shape with one closed end.

The light emitting elements may be arranged in the horizontal direction.

The light emitting element may cause light to be incident on the specimen horizontally.

The pressing member may press the specimen in the horizontal direction.

According to the test device of the embodiment of the present invention, since the specimen accommodating the test target is pressed against the specimen holding part, test accuracy can be improved.

### BRIEF DESCRIPTION OF THE DRAWINGS

Fig. 1 is a block diagram showing a configuration of a test device.
Fig. 2 is a perspective view of a measuring unit and a specimen.
Fig. 3 is a cross-sectional view of the measuring unit.
Fig. 4 is a cross-sectional view of the measuring unit.
Fig. 5 is an external perspective view of a pressing member.
Fig. 6 is an external perspective view of the pressing member.
Fig. 7 is an external perspective view of the pressing member.
Fig. 8 is an external perspective view of the pressing member.

### DESCRIPTION OF THE PREFERRED EMBODIMENTS

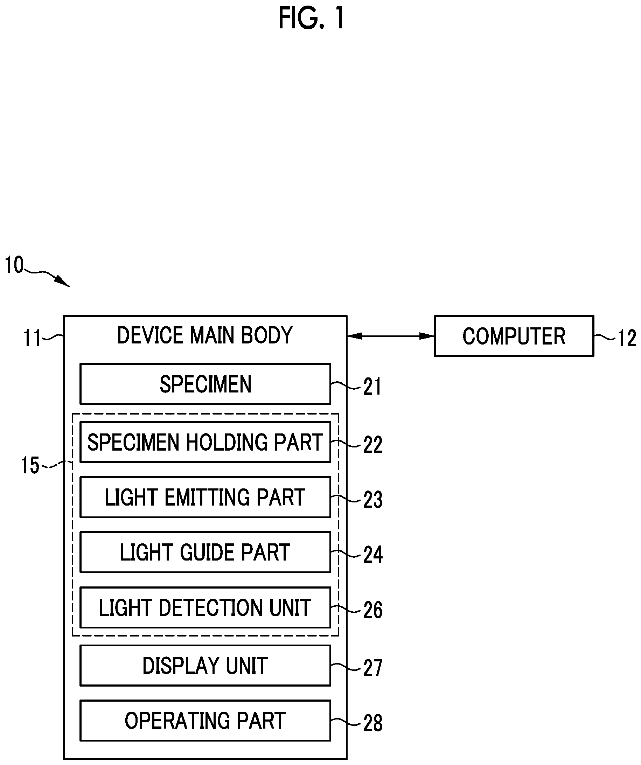

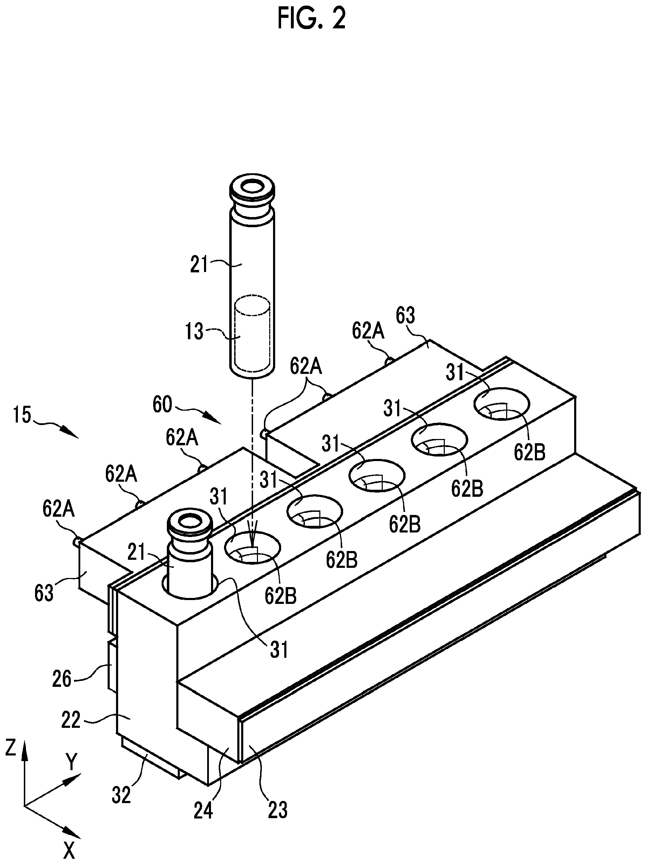

As shown in Fig. 1, a test device 10 is provided with a device main body 11 and a computer 12, and performs optical measurement on a test target 13 (refer to Fig. 2). In the present embodiment, an example in which the presence or absence of contamination by endotoxin is tested by performing optical measurement, and if necessary, the content or concentration of endotoxin is measured will be described.

In the present embodiment, the test target 13 is a solution in which a lysate reagent and a tested object are mixed. For example, the tested object is an injection such as a vaccine or a blood preparation, water obtained by recovering endotoxin from the tested object such as a syringe or an injection needle, polyethylene glycol, ethylenediamine tetraacetic acid (so-called recovery liquid), or blood or body fluid collected from a patient who may be infected with Gram-negative bacteria or fungi, or the like. The lysate reagent is Limulus Amebocyte Lysate (LAL) or Tachypleus Amebocyte Lysate (TAL).

The lysate reagent prepared from horseshoe crab blood cell extract can also be used for measuring (1 → 3) -β-D-glucan present on the cell wall of fungi, depending on the adjustment of the reagent components. The lysate reagent is used in a test to determine the presence or absence of fungal infection by measuring the concentration of (1 → 3) -β-D-glucan in the patient's blood or body fluid. In the present specification, in a case of being described as endotoxin, endotoxin may be read as (1 → 3) -β-D-glucan, and the test device 10 for endotoxin test also functions as a (1 → 3) -β-D-glucan test device. In addition, one test device 10 can perform test of both endotoxin and (1 → 3) -β-D-glucan.

The device main body 11 is a portion of the test device 10 including a measuring unit 15 for performing optical measurement of the test target 13. Specifically, the device main body 11 is provided with a specimen 21, a specimen holding part 22, a light emitting part 23, a light guide part 24, a light detection unit 26, a display unit 27, an operating part 28, and the like. Of these, the specimen holding part 22, the light emitting part 23, the light guide part 24, and the light detection unit 26 constitute the measuring unit 15.

As shown in Fig. 2, the specimen 21 is a container that accommodates the test target 13 and is mounted on the specimen holding part 22. In the present embodiment, the specimen 21 is formed in a cylindrical shape with one closed end, and is mounted on the specimen holding part 22 in a posture in which the longitudinal direction (direction of the axis of the cylinder) is parallel to the vertical direction and the closed end faces downward. In this manner, the specimen 21 has a circular cross section. Specifically, the cross section in the horizontal direction is circular in a state of being mounted on the measuring unit 15. The circular cross section means that the outer shape of the cross section is a circle, an ellipse, or a substantially smooth closed curve similar thereto.

In the present embodiment, the specimen 21 is made of heat-resistant glass. The reason why the specimen 21 is made of heat-resistant glass is to prevent the specimen 21 before accommodating the test target from containing endotoxin and (1 → 3) -β-D-glucan, for example, by the dry heat sterilization treatment at 250°C or higher and 30 minutes or longer.

The specimen holding part 22 holds a plurality of specimens 21 side by side. The specimen holding part 22 has a plurality of openings 31 (opening portions) arranged in a row in the Y direction. The openings 31 are elongated in the vertical direction (Z direction), and by inserting the specimens 21 into each of the openings 31, the specimens 21 are held in a row. In the present embodiment, the specimen holding part 22 has six openings 31, and by inserting the specimen 21 into all of these openings, six specimens 21 can be held at the same time. The specimen holding part 22 may hold seven or more or five or less specimens 21. In addition, the specimen holding part 22 has a heater 32 on the lower surface (surface on the negative side in the Z direction). By controlling the on and off of the heater 32, the temperature of the specimen holding part 22 and the specimen 21 held by the specimen holding part 22 can be maintained within a predetermined temperature or a predetermined temperature range. Therefore, the specimen holding part 22 also functions as a so-called constant-temperature tank.

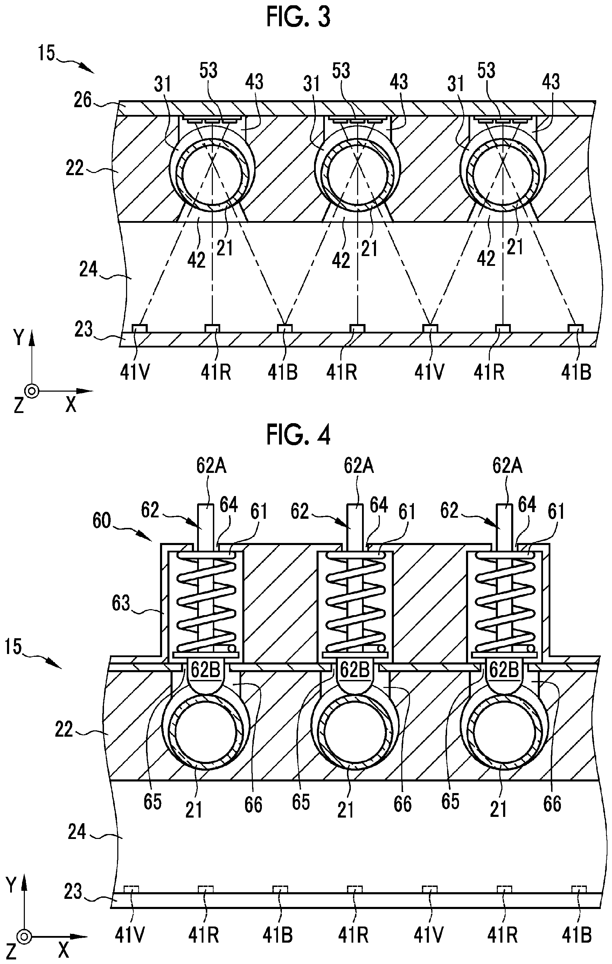

As shown in Fig. 3, the light emitting part 23 irradiates the specimen 21 held by the specimen holding part 22 with light used for test. The light guide part 24 is formed in a rectangular tubular shape surrounding the optical path of light from the light emitting part 23 to the specimen 21. One opening end of the light guide part 24 is connected to the specimen holding part 22, and the other opening end is connected to the light emitting part 23. The light emitting part 23 is attached to the specimen holding part 22 via the light guide part 24.

The light emitting part 23 is provided with a light emitting element 41V (first light emitting element), a light emitting element 41B (second light emitting element), and a light emitting element 41R (third light emitting element). These light emitting elements 41V, 41B, and 41R are, for example, light emitting diodes (LEDs), and irradiate the specimen 21 with light by emitting light. In the present embodiment, the light emitting elements 41V, 41B, and 41R irradiate the specimen 21 with light in the horizontal direction. The specimen holding part 22 is provided with an opening 42 having a range in which at least the specimen 21 is exposed to the light emitting elements 41V, 41B, and 41R side between the specimen 21 and the light emitting elements 41V, 41B, and 41R. Therefore, the light from the light emitting elements 41V, 41B, and 41R is horizontally incident on the specimen 21 through the opening 42.

The light emitting element 41R is used, for example, in a case of testing by a turbidimetric method, and the light emitted by the light emitting element 41R is, for example, red. In the present embodiment, one light emitting element 41R is provided for each specimen 21. In addition, in the present embodiment, the light emitting element 41R is provided substantially in front of each specimen 21. The front of the specimen 21 is a position where the optical axis is parallel to the X direction (direction perpendicular to the Y direction (direction where the specimens 21 are arranged)) and passes through the center of the specimen 21.

The light emitting elements 41V and 41B are selected and used, for example, in a case of performing a test by a colorimetric method. The light emitted by the light emitting element 41V is, for example, purple, and the light emitted by the light emitting element 41B is, for example, blue. In the present embodiment, the light emitting elements 41V and 41B are alternately arranged at a constant pitch with the light emitting element 41R interposed therebetween in the Y direction (direction where the specimens 21 are arranged). Specifically, the light emitting elements 41V, 41B and 41R are arranged in the order of the light emitting element 41V, the light emitting element 41R, the light emitting element 41B, the light emitting element 41R, the light emitting element 41V, the light emitting element 41R, the light emitting element 41B··· in the Y direction at a constant pitch. That is, the light emitting element 41R is arranged at an intermediate point between the light emitting element 41V and the light emitting element 41B.

In addition, in the present embodiment, one light emitting element 41V is provided for each of the two specimens 21, and the two specimens 21 are irradiated with light from one light emitting element 41V Similarly, one light emitting element 41B is also provided for each of the two specimens 21, and the two specimens 21 are irradiated with light from one light emitting element 41B. In this manner, unlike the light emitting element 41R, the light emitting elements 41V and 41B are arranged in a non-frontal position of the specimen 21, and irradiate the specimen 21 with light from oblique directions inclined with respect to the optical axis of the light emitting element 41R.

Although the example in which two specimens 21 are irradiated with light from one light emitting element 41V has been described, one light emitting element 41V may be provided for each specimen 21. In addition, although the example in which two specimens 21 are irradiated with light from one light emitting element 41B has been described, one light emitting element 41B may be provided for each specimen 21. Furthermore, although the example in which one light emitting element 41R is provided for each specimen 21 has been described, a configuration may be adopted in which a plurality of specimens 21 are irradiated with light from one light emitting element 41R.

The light detection unit 26 is provided with a light-receiving element 53 that receives light emitted from the light emitting elements 41V, 41B, and 41R and transmitted through the specimen 21 (test target) or scattered in a case of transmitting through the specimen 21 (test target 13). The light-receiving element 53 is, for example, an optical sensor such as a photo diode (PD), and is provided for each specimen 21. In the present embodiment, since the specimen holding part 22 holds six specimens 21, the light detection unit 26 is provided with the light-receiving element 53 at a position where the light transmitted through each of these specimens 21 can be received. In addition, the specimen holding part 22 is provided with an opening 43 between the specimen 21 and the light-receiving element 53 having a range in which at least the light-receiving element 53 is exposed to the specimen 21 side. Therefore, the light transmitted through the specimen 21 reaches the light-receiving element 53 through the opening 43.

Returning to Fig. 2, the specimen holding part 22 is provided with a specimen pressing part 60. As shown in Fig. 4, the specimen pressing part 60 is provided with a biasing member 61 and a pressing member 62, which are housed in a case 63. By attaching the case 63 to the specimen holding part 22, the specimen pressing part 60 is attached to the specimen holding part 22. In the present embodiment, one set of the biasing member 61 and the pressing member 62 is provided for one opening 31 (opening 31 on which the specimen 21 is mounted). That is, in the present embodiment, six sets of the biasing member 61 and the pressing member 62 are provided. In addition, in the present embodiment, one case 63 accommodates three sets of the biasing member 61 and the pressing member 62. That is, two cases 63 are provided in the present embodiment.

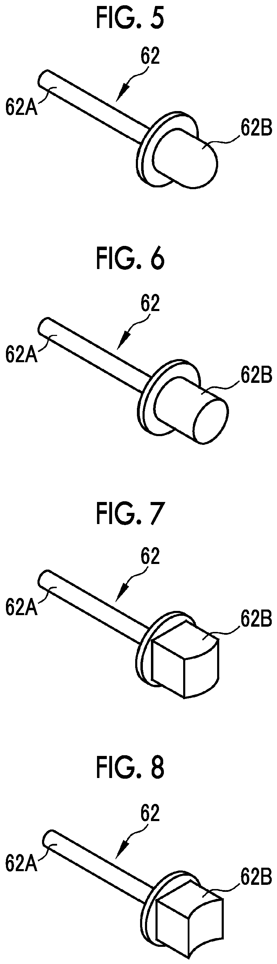

The pressing member 62 is provided with a pressing end 62B at one end of a shaft 62A. The pressing end 62B is made of a material having sliding property such as polyoxymethylene (POM). As shown in Fig. 5, in the present embodiment, the tip part of the pressing end 62B is spherical, but as shown in Fig. 6, the tip part of the pressing end 62B may be planar. In addition, as shown in Figs. 7 and 8, tip of the pressing end 62B may be curved. In Fig. 7, the tip of the pressing end 62B is formed as a curved surface having a central projected shape, and in Fig. 8, the tip of the pressing end 62B is formed as a curved surface having a central recessed shape.

Returning to Fig. 4, openings 64 and 65 are formed in the case 63, and the pressing member 62 is accommodated in the case 63 in a state where the shaft 62A projects from the opening 64 and the pressing end 62B projects from the opening 65, and is slidably supported in the Y direction (horizontal direction, the direction where the pressing end 62B projects from the opening 65 and the direction where the pressing end 62B is accommodated in the case 63). The biasing member 61 is a coil spring in the present embodiment, and biases the pressing member 62 in a direction where the pressing end 62B projects from the opening 65. In the present embodiment, the specimen pressing part 60 is provided on the side opposite to the light emitting part 23 across the opening 31 on which the specimen 21 is mounted. In the present embodiment, the pressing end 62B is biased toward the light emitting element 41R by the biasing member 61.

An opening 66 is formed in the specimen holding part 22. The pressing member 62 causes the pressing end 62B to project through the openings 65 and 66 into the opening 31 on which the specimen 21 is mounted by the biasing of the biasing member 61. The specimen 21 is pressed toward the interior wall on the side opposite to the pressing member 62 (in the present embodiment, light emitting element 41R (interior wall on the light emitting element 41R side)) of the interior wall of the opening 31. As a result, the specimen 21 is supported in close contact with a predetermined position of the interior wall of the opening 31 (in the present embodiment, interior wall on the light emitting element 41R side). In a case where the specimen 21 is mounted on the opening 31, the pressing end 62B is pressed toward the inside of the case 63 by the specimen 21, and the pressing end 62B moves toward the inside of the case 63 against the biasing force of the biasing member 61. As a result, the specimen 21 can be mounted on the opening 31. In addition, by pulling the shaft 62A projecting from the opening 64 of the case 63, it is also possible to mount the specimen 21 in the opening 31 by moving the pressing end 62B toward the inside of the case 63 against the biasing force of the biasing member 61.

The opening 31 for mounting the specimen 21 is formed to have an outer diameter one size larger than the specimen 21 in order to mount the specimen 21 smoothly, and by pressing the specimen 21 with the specimen pressing part 60 as described above, the specimen 21 does not rattle in the opening 31. In addition, the specimen 21 can be supported at a predetermined position of the opening 31 (in the present embodiment, position in close contact with the interior wall on the light emitting element 41R side of the interior wall of the opening 31). As a result, measurement (test) can be performed with high accuracy.

That is, in a case where the specimen 21 rattles in the opening 31 or the position of the specimen 21 varies, due to the change in the state of refraction of light in a case of transmitting through the side wall of the specimen 21 (optical path of the light from the light emitting elements 41V, 41B, and 41R to the light-receiving element 53 changes), there arises a problem that measurement results are different from each other even in the same specimen 21, and/or a problem that the measurement error increases. On the other hand, in the test device 10 of the embodiment of the present invention, the specimen 21 is pressed by the specimen pressing part 60 to be supported at a predetermined position in the opening 31, so the above-described problem can be prevented.

In addition, in the test device 10 of the embodiment of the present invention, both the specimen 21 and the opening 31 on which the specimen 21 is mounted have a circular cross section. Therefore, it is possible to prevent variations in the movement destination (support position of the specimen 21) in a case where the specimen 21 is pressed. In other words, the specimen 21 is pushed and moves in a direction from the pressing member 62 to be supported at the movement destination, since both the specimen 21 and the opening 31 have circular cross sections, the movement destination in a case where the specimen 21 is pressed is limited to one point of the interior wall of the opening 31 that is farthest from the pressing member 62. By supporting the specimen 21 at one limited point (preventing variations in the support position of the specimen 21), more accurate measurement (test) can be performed.

Returning to Fig. 1, the display unit 27 is, for example, an indicator indicating whether or not the test can be executed and/or the progress of the test. In addition, the display unit 27 can be a display screen such as a liquid crystal panel, or a touch panel or the like.

The operating part 28 is a switch or the like for directly giving an operation instruction to the device main body 11. In a case where the display unit 27 is a touch panel, at least a part of the operating part 28 can be formed by using a graphical user interface displayed on the touch panel.

The computer 12 is a part of the test device 10 that controls each part of the device main body 11 and performs analysis or determination using measurement data (signals and the like acquired from the light-receiving element 53) acquired from the device main body 11. Specifically, the computer 12 acquires the measurement data from the measuring unit 15 and analyzes or the like using the measurement data to determine the presence or absence of endotoxin or to generate data that can determine the presence or absence of endotoxin. In the present embodiment, the computer 12 is provided separately from the device main body 11, but a part or all of the functions of the computer 12 can be incorporated into the device main body 11.

In the test device 10, endotoxin test by a colorimetric method and a turbidimetric method can be performed. The colorimetric method is a test method of identifying the presence or absence of endotoxin by measuring the activation of the lysate reagent by endotoxin by the absorbance at a specific wavelength. Since the measuring unit 15 is provided with two types of light emitting elements, the light emitting element 41V and the light emitting element 41B, for test by the colorimetric method, the test accuracy can be improved by subtracting the disturbance other than the colorimetric reaction by using both of the light emitting elements. The turbidimetric method is a test method of identifying the presence or absence of endotoxin by measuring the change in turbidity of a sample gelled by activation of a lysate reagent by endotoxin. In the test by the turbidimetric method, the light emitting element 41 for each specimen 21 is used.

As described above, in the test device 10, the specimen 21 is pressed by the pressing member 62 and supported at a predetermined position in the opening 31, so that measurement (test) can be performed with high accuracy.

In the above embodiment, the test device 10 performs an endotoxin test, but the present invention can be used for a device that performs a test other than the endotoxin test for detecting transmitted light, scattered light, or the like. In addition, although the test device 10 includes one measuring unit 15 in the above embodiment, the test device 10 may include a plurality of measuring units 15 in the device main body 11.

### Explanation of References

10: test device
11: device main body
12: computer
13: test target
15: measuring unit
21: specimen
22: specimen holding part
23: light emitting part
24: light guide part
26: light detection unit
27: display unit
28: operating part
31: opening (opening portion)
32: heater
41V: light emitting element (first light emitting element)
41B light emitting element (second light emitting element)
41R: light emitting element (third light emitting element)
42: opening
43: opening
53: light-receiving element
60: specimen pressing part
61: biasing member
62: pressing member
62A: shaft
62B: pressing end
63: case
64: opening
65: opening
66: opening

## Claims

1. A test device comprising:
a specimen with a circular cross section that accommodates a test target;
a specimen holding part that has an opening portion with a circular cross section and holds the specimen;
a plurality of light emitting elements that irradiate the specimen with light from a plurality of directions;
a light-receiving element that faces the light emitting element through the specimen; and
a pressing member that projects from an interior wall of the opening portion into the opening portion to press the specimen and press the specimen against the interior wall on an opposite side.

2. The test device according to claim 1, further comprising:
a first light emitting element and a second light emitting element as the light emitting elements,
wherein the pressing member presses the specimen toward an intermediate point between the first light emitting element and the second light emitting element.

3. The test device according to claim 2, further comprising:
a third light emitting element disposed at the intermediate point between the first light emitting element and the second light emitting element as the light emitting element,
wherein the pressing member presses the specimen toward the third light emitting element.

4. The test device according to any one of claims 1 to 3,
wherein each of the light emitting elements has a mutually different emission color.

5. The test device according to any one of claims 1 to 4,
wherein the specimen holding part includes a plurality of the opening portions and holds a plurality of the specimens.

6. The test device according to claim 5,
wherein the specimen is formed long in a direction perpendicular to the cross section, and
the specimen holding part holds the plurality of specimens arranged in a horizontal direction in a posture in which a longitudinal direction is vertical.

7. The test device according to claim 6,
wherein the specimen is formed in a cylindrical shape with one closed end.

8. The test device according to claim 6 or 7,
wherein the light emitting elements are arranged in the horizontal direction.

9. The test device according to claim 8,
wherein the light emitting element causes light to be incident on the specimen horizontally.

10. The test device according to claim 9,
wherein the pressing member presses the specimen in the horizontal direction.
